# DEMANDE DE BREVET EUROPEEN

(11) **EP 4 556 759 A1**
(43) Date de publication de la demande: **21.05.2025**
(21) Numéro de dépôt: 24210639.1
(22) Date de dépôt: 04.11.2024
(51) Int. Cl.: F16H 63/04, F16H 63/32, F16H 48/34, F16H 57/00, F16H 61/32, F16H 61/28, F16H 63/00, F16H 63/30

(54) **DISPOSITIF D ACTIONNEMENT POUR SYSTÈME DE TRANSMISSION**

(30) Priorité: 15.11.2023 FR 2312524
(71) Demandeur: VALEO EMBRAYAGES, 80009 Amiens (FR)
(72) Inventeur: KLEIN, Vincent, 80000 Amiens (FR); DIASCORN, Fabien, 80000 Amiens (FR); SAVASTANO, Nicola, Mondovi (IT); CAUMARTIN, Laurent, 80000 Amiens (FR); MOLLIER, Christophe, 80009 AMIENS (FR)
(74) Mandataire: Valeo Powertrain Systems

(57) **Abrégé**

La présente invention concerne un dispositif d'actionnement (30) pour un système de transmission (1), comprenant :
- un moteur électrique (31) apte à être fixé à un carter d'actionnement ;
- un dispositif de réduction de vitesse (40) lié cinématiquement au rotor du moteur électrique et un arbre de sortie (41) du dispositif de réduction de vitesse ayant un premier axe de rotation (X1) ;
- une fourchette d'actionnement (50) solidaire en rotation de l'arbre de sortie du dispositif de réduction de vitesse et comprenant une extrémité (51) d'actionnement décalée radialement par rapport au premier axe de rotation (X1), la fourchette d'actionnement étant apte à pivoter selon un premier secteur angulaire (α1) dans le carter d'actionnement.

## Description

La présente invention concerne le domaine des dispositifs d'actionnement pour système de transmission.

Le dispositif d'actionnement est par exemple inséré dans un système de transmission du type réducteur de vitesse comprenant à la sortie un différentiel visant à transmettre et distribuer un couple provenant d'une machine électrique tournante vers deux arbres de roue d'un essieu de véhicule motorisé. Le différentiel peut contenir un dispositif de déconnexion intercalé entre la sortie du réducteur de vitesse et la roue du véhicule pour dissocier le système de transmission des roues du véhicule. Cette déconnexion peut s'avérer bénéfique en termes de rendement énergétique lorsqu'il n'est pas nécessaire de fournir de couple aux roues du véhicule.

Le document WO21115374 A1 divulgue un système de transmission de type différentiel comportant un boitier de différentiel mobile en rotation autour d'un premier axe qui est équipé d'une roue dentée entraînée par un moteur du véhicule. A l'intérieur du boîtier sont logés une couronne porteuse guidée en rotation dans le boîtier, deux engrenages satellites qui sont montés en rotation sur la couronne porteuse autour d'un deuxième axe perpendiculaire au premier axe, et deux engrenages planétaires qui engrènent chacun avec les deux engrenages satellites et qui sont chacun solidaires en rotation d'un arbre de roue. Utilisé sur un véhicule automobile, le système de transmission de type différentiel permet aux roues motrices de tourner à des vitesses différentes lors du passage d'un virage : les roues situées à l'extérieur du virage tournent plus vite que celles situées à l'intérieur.

Par ailleurs, le différentiel comporte un dispositif de déconnexion qui permet soit d'accoupler le boîtier du différentiel à la couronne porteuse afin de permettre une transmission et une distribution du couple du moteur vers les deux arbres de roue de l'essieu soit de les désaccoupler afin d'interrompre la transmission de couple entre le moteur et les arbres de roue. Le dispositif de déconnexion est piloté par une fourchette d'actionnement commandé par un moteur électrique ; le moteur électrique génère un déplacement axial de la fourchette selon une direction parallèle au premier axe du boitier de différentiel. Le dispositif de déconnexion est un dispositif à crabot. Un tel dispositif de déconnexion n'est pas pleinement satisfaisant car la vitesse de déplacement de l'extrémité de la fourchette d'actionnement est peu rapide. Le temps d'actionnement pour atteindre les deux positions accouplée et désaccouplée du dispositif de déconnexion est long. De plus, la transformation du mouvement de rotation du moteur électrique en mouvement axial de la fourchette nécessite l'utilisation d'une vis à billes qui est un dispositif mécanique extrêmement couteux pour garantir une bonne fiabilité tout au long de la durée de vie du véhicule. Egalement, l'assemblage d'un tel dispositif de déconnexion sur un différentiel de système de transmission peut s'avérer complexe.

La présente invention vise à pallier ces inconvénients en proposant un dispositif d'actionnement ayant un temps d'actionnement réduit pour atteindre les deux positions accouplée et désaccouplée du dispositif de déconnexion et dont l'assemblage sur le système de transmission est facilité.

La présente invention a ainsi pour principal objet un dispositif d'actionnement pour un système de transmission, comprenant :
- un moteur électrique apte à être fixé à un carter d'actionnement ;
- un dispositif de réduction de vitesse lié cinématiquement au rotor du moteur électrique et un arbre de sortie du dispositif de réduction de vitesse ayant un premier axe de rotation ;
- une fourchette d'actionnement solidaire en rotation de l'arbre de sortie du dispositif de réduction de vitesse et comprenant une extrémité d'actionnement décalée radialement par rapport au premier axe de rotation, la fourchette d'actionnement étant apte à pivoter selon un premier secteur angulaire dans le carter d'actionnement,
dans lequel la fourchette d'actionnement est apte à prendre une position angulaire extrême de montage correspondant à une des bornes du premier secteur angulaire et dans lequel la fourchette d'actionnement est apte à prendre une position angulaire de fonctionnement distincte de la position angulaire extrême de montage, la position angulaire de fonctionnement pouvant varier dans un deuxième secteur angulaire compris dans le premier secteur angulaire.

Grâce au décalage radial de l'extrémité d'actionnement par rapport au premier axe de rotation malgré un débattement angulaire réduit de la fourchette d'actionnement dans le deuxième secteur angulaire, il est possible d'avoir un grand débattement axial de l'extrémité d'actionnement de la fourchette. Le bras de levier ainsi créé permet d'augmenter la vitesse de déplacement de l'extrémité de la fourchette d'actionnement, ce qui a pour conséquence de réduire le temps d'actionnement du dispositif de déconnexion.

La valeur d'angle du premier secteur angulaire peut être comprise entre 5° et 120°.

La valeur d'angle du deuxième secteur angulaire peut être comprise entre 1° et 30°.

De préférence, la position angulaire extrême de montage de la fourchette d'actionnement est apte à être obtenue par une mise en butée mécanique du carter d'actionnement et d'un composant choisi parmi la fourchette d'actionnement, le dispositif de réduction de vitesse ou l'arbre de sortie. La précision du positionnement de la fourchette d'actionnement lors de la phase de montage sur le système de transmission est ainsi améliorée.

Avantageusement, la fourchette d'actionnement peut comprendre un corps et au moins un bras d'actionnement supportant l'extrémité d'actionnement, notamment deux bras d'actionnement, l'au moins un bras d'actionnement est obtenu de matière avec le corps de la fourchette.

Avantageusement, l'extrémité d'actionnement peut être un patin articulé à l'extrémité du bras d'actionnement ou un roulement à billes dont la bague non tournante est fixée sur le bras d'actionnement.

Selon un mode de réalisation de l'invention, la position angulaire extrême de montage de la fourchette d'actionnement est apte à être obtenue par une mise en butée mécanique du carter d'actionnement et d'une excroissance formée sur la fourchette d'actionnement. De cette manière, la précision du positionnement de la fourchette d'actionnement lors de la phase de montage sur le système de transmission est encore améliorée.

De préférence, la fourchette d'actionnement peut comprendre un corps et au moins un bras d'actionnement supportant l'extrémité d'actionnement, notamment deux bras d'actionnement, l'excroissance et l'au moins un bras d'actionnement sont décalés angulairement par rapport au premier axe de rotation.

Selon un exemple, l'au moins un bras d'actionnement et l'excroissance sont décalés d'un angle de 180° par rapport au premier axe de rotation.

Selon un autre exemple, l'au moins un bras d'actionnement et l'excroissance sont décalés d'un angle de 120° par rapport au premier axe de rotation.

Avantageusement, l'excroissance de la fourchette d'actionnement est apte à être en appui sur une face plane du carter d'actionnement.

Selon un mode de réalisation de l'invention, la position angulaire extrême de montage de la fourchette d'actionnement est apte à être obtenue par une mise en butée mécanique du carter d'actionnement et d'une excroissance formée sur un des pignons ou secteur denté du dispositif de réduction de vitesse.

De préférence, le pignon supportant l'excroissance comprend une denture s'étendant sur un troisième secteur angulaire compris entre 20° et 150°.

Avantageusement, l'excroissance du pignon est apte à être en appui sur une face plane du carter d'actionnement.

Selon un autre mode de réalisation de l'invention, la position angulaire extrême de montage de la fourchette d'actionnement est apte à être obtenue par une mise en butée mécanique du carter d'actionnement et d'une goupille emmanchée dans l'arbre de sortie, l'emmanchement étant perpendiculaire au premier axe de rotation.

Avantageusement, la goupille emmanchée est apte à être en appui sur une face plane du carter d'actionnement.

L'invention a également pour objet, selon un autre de ses aspects, un module d'actionnement comprenant un carter d'actionnement et un dispositif d'actionnement reprenant tout ou partie des caractéristiques mentionnées précédemment, le carter d'actionnement et le dispositif d'actionnement sont pré-montés pour former un ensemble unitaire, et dans lequel l'extrémité d'actionnement de la fourchette d'actionnement est proéminente par rapport au carter d'actionnement.

Ce module d'actionnement, selon l'invention, présente l'avantage, grâce au pré-montage pour former un ensemble unitaire, d'éviter une étape de montage supplémentaire lors de l'assemblage du système de transmission en usine, ce qui permet de ne pas perturber la ligne de fabrication du constructeur du véhicule. Le module d'actionnement peut être testé fonctionnellement chez le fabriquant du module et non plus chez le constructeur du véhicule.

Le fait que l'extrémité d'actionnement de la fourchette d'actionnement dépasse de manière proéminente du carter d'actionnement permet d'envisager un montage du module d'actionnement avec une faible ou une absence totale de visibilité sur l'intérieur du carter de transmission.

Selon cet aspect de l'invention, le module d'actionnement comprend un carter d'actionnement et un dispositif d'actionnement pour un système de transmission, le dispositif d'actionnement comprenant :
- un moteur électrique apte à être fixé à un carter d'actionnement ;
- un dispositif de réduction de vitesse lié cinématiquement au rotor du moteur électrique et un arbre de sortie du dispositif de réduction de vitesse ayant un premier axe de rotation ;
- une fourchette d'actionnement solidaire en rotation de l'arbre de sortie du dispositif de réduction de vitesse et comprenant une extrémité d'actionnement décalée radialement par rapport au premier axe de rotation, la fourchette d'actionnement étant apte à pivoter selon un premier secteur angulaire dans le carter d'actionnement,

dans lequel la fourchette d'actionnement est apte à prendre une position angulaire extrême de montage correspondant à une des bornes du premier secteur angulaire et dans lequel la fourchette d'actionnement est apte à prendre une position angulaire de fonctionnement distincte de la position angulaire extrême de montage, la position angulaire de fonctionnement pouvant varier dans un deuxième secteur angulaire compris dans le premier secteur angulaire.
et dans lequel le carter d'actionnement et le dispositif d'actionnement sont pré-montés pour former un ensemble unitaire, et dans lequel l'extrémité d'actionnement de la fourchette d'actionnement est proéminente par rapport au carter d'actionnement.

Avantageusement, un élément de verrouillage amovible peut être inséré dans un orifice du carter d'actionnement et bloquer la fourchette d'actionnement dans la position angulaire extrême de montage jusqu'à l'assemblage sur le système de transmission. Après assemblage, l'élément de verrouillage est retiré du carter d'actionnement pour libérer la fourchette d'actionnement.

Le module d'actionnement selon l'invention peut présenter l'une ou l'autre des caractéristiques décrites ci-dessous combinées entre elles ou prises indépendamment les unes des autres :
- le carter d'actionnement comprend une face plane agencée pour être en contact avec un composant choisi parmi la fourchette d'actionnement, le dispositif de réduction de vitesse ou l'arbre de sortie lorsque la fourchette d'actionnement est dans la position angulaire extrême de montage ;
- la face plane du carter d'actionnement est soit brute de fonderie, soit usinée ;
- le carter d'actionnement comprend un fond et deux parois parallèles issues de matière avec le fond, les deux parois servant de support à l'arbre de sortie ;
- le carter d'actionnement supporte un capteur de position de la fourchette d'actionnement, la face de détection du capteur de position étant disposée en en vis-à-vis d'au moins un bras d'actionnement de la fourchette d'actionnement ;
- le moteur électrique est rapporté sur une paroi externe du carter d'actionnement ;
- le moteur électrique est logé dans le volume interne du carter d'actionnement ;
- la face plane de contact avec l'excroissance est disposée dans le fond du carter ;
- la face plane de contact avec l'excroissance est disposée sur un des bords du carter ;
- Le carter d'actionnement comprend une embase de fixation et l'extrémité d'actionnement de la fourchette d'actionnement dépasse de l'embase de fixation du carter d'actionnement.

L'invention a également pour objet, selon un autre de ses aspects, un système de transmission comprenant :
- un carter de transmission ;
- un arbre de transmission comprenant un dispositif de déconnexion de la transmission du couple, l'arbre de transmission est inséré dans un alésage du carter de transmission ;
- un module d'actionnement reprenant tout ou partie des caractéristiques mentionnées précédemment, dans lequel la fourchette d'actionnement passe au travers d'une lumière réalisée dans le carter de transmission et l'extrémité d'actionnement s'insère dans une gorge annulaire du dispositif de déconnexion.

Ce système de transmission permet de garantir la bonne mise en place de la fourchette d'actionnement par rapport au dispositif de déconnexion de l'arbre de transmission à la fin de l'assemblage malgré la faible ou l'absence totale de visibilité sur l'intérieur du carter de transmission.

De préférence, l'arbre de transmission est un différentiel comprenant un boitier de différentiel supportant une roue dentée et une couronne porteuse, le boitier et la couronne porteuse étant mobiles en rotation l'un par rapport à l'autre autour d'un axe principal X, le boitier étant destiné à être entrainé par une machine électrique tournante et la couronne porteuse étant destiné à entraîner au moins un arbre de roue du véhicule motorisé.

Avantageusement, le dispositif de déconnexion comporte une première partie d'accouplement solidaire en rotation du boitier et une deuxième partie d'accouplement solidaire en rotation de la couronne porteuse, la première partie d'accouplement étant mobile axialement par rapport au boitier entre une position accouplée dans laquelle la première partie d'accouplement est accouplée avec la couronne porteuse pour transmettre un couple entre le boitier et la couronne porteuse et une position désaccouplée dans laquelle la première partie d'accouplement et la deuxième partie d'accouplement sont désaccouplées l'une de l'autre, et dans lequel la première partie d'accouplement supporte un baladeur axial de forme annulaire qui comprend la gorge annulaire du dispositif de déconnexion.

De préférence, l'extrémité d'actionnement peut être insérée dans une gorge annulaire du dispositif de déconnexion, plus précisément dans une gorge annulaire formée dans un baladeur axial qui est rapporté sur la première partie d'accouplement. Avantageusement, le baladeur axial peut présenter une forme de révolution et comprendre un rebord d'appui et un rebord d'accostage, ledit rebord d'appui et ledit rebord d'accostage entourant la gorge annulaire.

De préférence, le diamètre extérieur du rebord d'accostage peut être supérieur au diamètre extérieur du rebord d'appui. Cette différence de diamètre permet de garantir la bonne mise en place de la fourchette d'actionnement par rapport au dispositif de déconnexion de l'arbre de transmission à la fin de l'assemblage malgré la faible ou l'absence totale de visibilité sur l'intérieur du carter de transmission.

L'invention a également pour objet, selon un autre de ses aspects, un procédé d'assemblage d'un système de transmission reprenant tout ou partie des caractéristiques mentionnées précédemment, comprenant les étapes suivantes :
- on insère l'arbre de transmission dans un alésage du carter de transmission jusqu'à la mise en butée axiale de l'arbre de transmission sur le carter de transmission selon la direction de l'axe principal X de l'alésage ;
- on insère la fourchette d'actionnement au sein de la lumière du carter de transmission et on applique une extrémité d'actionnement de la fourchette d'actionnement dans la gorge annulaire du dispositif de déconnexion ;
- on rapproche le dispositif d'actionnement selon une direction perpendiculaire à l'axe principal X de l'alésage du carter de transmission jusqu'à la mise en appui du carter d'actionnement du module d'actionnement sur le carter de transmission ;
- on fixe le module d'actionnement sur le carter de transmission avec des vis de fixation.

Ce procédé d'assemblage permet, notamment grâce à la proéminence de l'extrémité d'actionnement de la fourchette d'actionnement par rapport au carter d'actionnement, d'assembler le module d'actionnement sur le système de transmission malgré la faible ou l'absence totale de visibilité sur l'intérieur du carter de transmission.

Egalement, l'assemblage du module d'actionnement peut se faire indépendamment du reste des composants du système de transmission ce qui peut faciliter la maintenance en cas de défaillance du moteur électrique ou du capteur de position du module d'actionnement.

L'invention a également pour objet, selon un autre de ses aspects, un système de transmission comprenant :
- un carter de transmission ;
- un arbre de transmission comprenant un dispositif de déconnexion de la transmission du couple, l'arbre de transmission est inséré dans un alésage du carter de transmission ;
- un dispositif d'actionnement reprenant tout ou partie des caractéristiques mentionnées précédemment, dans lequel la fourchette d'actionnement est logée dans le carter de transmission et la fourchette d'actionnement s'insère dans une gorge annulaire du dispositif de déconnexion ;

le carter de transmission fait office de carter d'actionnement,
le carter de transmission et le dispositif d'actionnement sont pré-montés pour former un ensemble unitaire.

Ce système de transmission permet de garantir la bonne mise en place de la fourchette d'actionnement par rapport au dispositif de déconnexion de l'arbre de transmission à la fin de l'assemblage malgré l'absence totale de visibilité sur l'intérieur du carter de transmission. Grâce à cette architecture du système de transmission pour laquelle le carter de transmission fait directement office du carter d'actionnement, il est possible d'appliquer en aveugle l'extrémité d'actionnement de la fourchette d'actionnement dans la gorge annulaire du dispositif de déconnexion lors du déplacement de l'arbre de transmission selon la direction de l'axe principal X de l'alésage.

L'invention a également pour objet, selon un autre de ses aspects, un système de transmission comprenant :
- un carter de transmission ;
- un arbre menant de transmission comprenant une première cannelure externe, l'arbre menant de transmission étant inséré dans un alésage du carter de transmission ;
- un arbre mené de transmission coaxial à l'arbre menant comprenant une deuxième cannelure externe ;
- un baladeur axial concentrique aux arbres mené et menant ayant une forme de révolution, le baladeur axial comprenant au moins une première cannelure interne de connexion agencée pour entraîner en rotation l'arbre menant et une deuxième cannelure interne de connexion agencée pour entraîner en rotation l'arbre mené, les première et deuxième cannelures internes étant engagées respectivement dans la première cannelure externe de l'arbre menant et la deuxième cannelure externe de l'arbre mené lorsque le baladeur axial est dans une position extrême d'accouplement ;
- un module d'actionnement reprenant tout ou partie des caractéristiques mentionnées précédemment, dans lequel la fourchette d'actionnement passe au travers d'une lumière réalisée dans le carter de transmission et la fourchette d'actionnement s'insère dans une gorge annulaire du baladeur axial.

Cette architecture de système de transmission est compacte et conviendra pour toute intégration au sein d'un réducteur de vitesse de véhicule électrique pour déconnecter la transmission du couple en provenance de l'arbre menant, par exemple l'arbre de sortie d'un réducteur de vitesse, à l'arbre mené, par exemple la roue d'un véhicule. Lorsque la machine électrique réversible associée au réducteur de vitesse est inactive, il n'y a pas d'intérêt à laisser ladite machine connectée à la roue du véhicule.

Ce système de transmission permet de garantir la bonne mise en place de la fourchette d'actionnement par rapport au baladeur axial à la fin de l'assemblage malgré la faible ou l'absence totale de visibilité sur l'intérieur du carter de transmission.

Avantageusement, la deuxième cannelure interne de connexion du baladeur axial peut être réalisée sous la forme d'une série de cannelures internes espacées axialement selon un pas régulier, par exemple cinq cannelures internes espacées axialement selon un pas compris entre 3 et 15 mm.

De préférence, la deuxième cannelure interne peut être désengagée de la deuxième cannelure externe de l'arbre mené lorsque le baladeur axial est dans une autre position extrême de désaccouplement.

L'invention concerne par ailleurs un véhicule automobile hybride ou électrique comprenant un système de transmission tel qu'évoqué précédemment.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] est une vue isométrique d'un module équipé de son dispositif d'actionnement selon un premier mode de réalisation de l'invention ;
[Fig. 2] est une vue en coupe montrant l'assemblage du module d'actionnement selon le premier mode de réalisation de la figure 1 sur un système de transmission ;
[Fig. 3] est une vue en perspective montrant l'assemblage du module d'actionnement selon le premier mode de réalisation de la figure 1 sur un système de transmission ;
[Fig. 4] est une vue en coupe montrant le module d'actionnement selon le premier mode de réalisation de la figure 1 assemblé sur le système de transmission ;
[Fig. 5] est une vue en perspective explosée d'un dispositif de déconnexion compris dans le système de transmission de la figure 2 ;
[Fig. 6] est une vue en coupe d'un module d'actionnement équipé de son dispositif d'actionnement selon un deuxième mode de réalisation de l'invention ;
[Fig. 7] est une vue en coupe d'un module d'actionnement équipé de son dispositif d'actionnement selon un troisième mode de réalisation de l'invention ;
[Fig. 8] est une vue en perspective d'un module d'actionnement équipé de son dispositif d'actionnement selon un quatrième mode de réalisation de l'invention ;
[Fig. 9] est une vue en coupe montrant un système de transmission et un dispositif d'actionnement selon un cinquième mode de réalisation de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres.

Sur les figures, les éléments communs à plusieurs figures conservent la même référence.

Dans la description et les revendications, on utilisera, les termes "externe" et "interne" ainsi que les orientations "axiale" et "radiale" pour désigner, selon les définitions données dans la description, des éléments du système de transmission. Par convention, l'orientation "radiale" est dirigée orthogonalement à l'axe principal X de rotation du système de transmission déterminant l'orientation "axiale" et, de l'intérieur vers l'extérieur en s'éloignant dudit axe, l'orientation "circonférentielle" est dirigée orthogonalement à l'axe principal X et orthogonalement à la direction radiale.

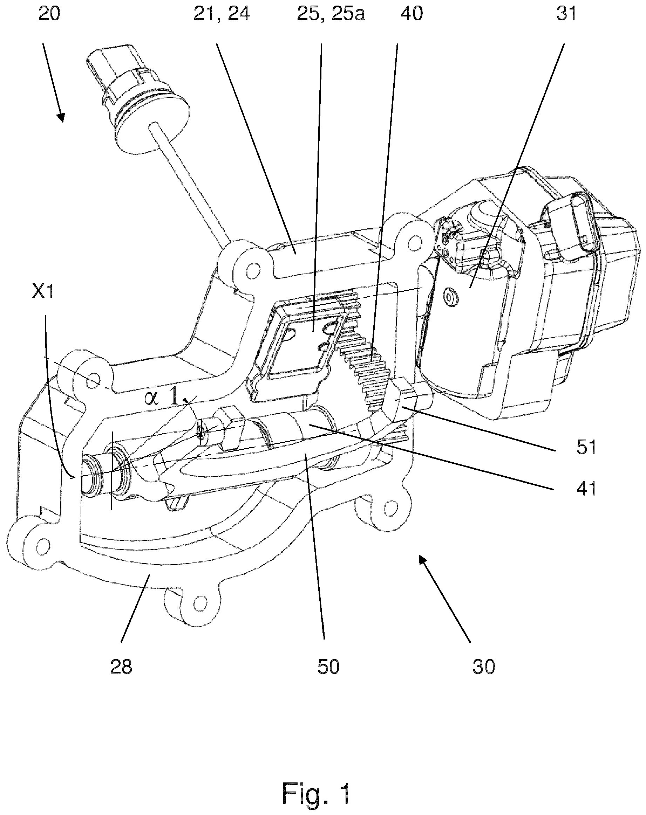

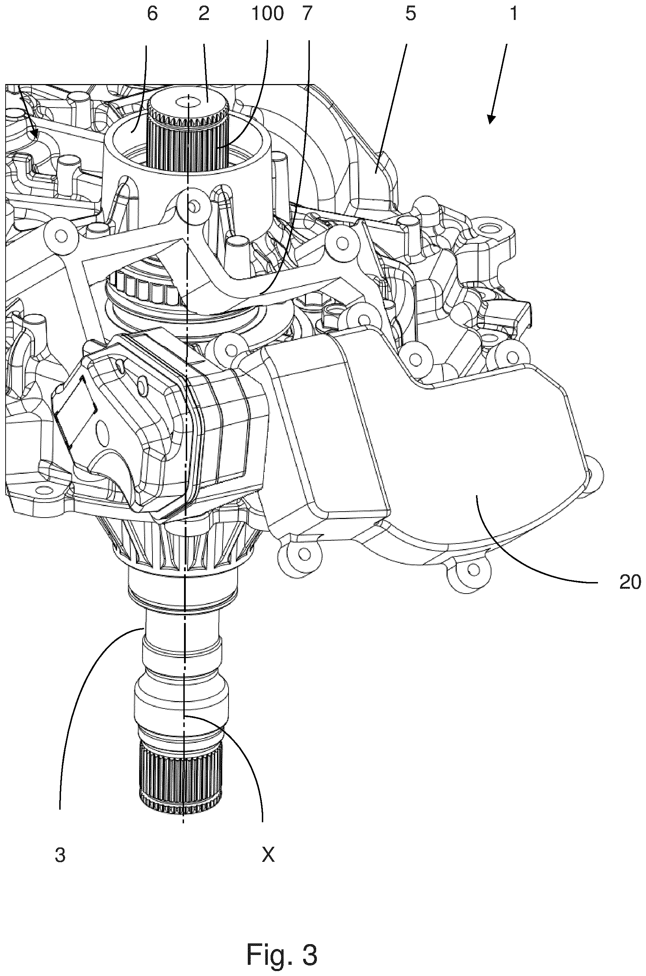

Les figures 1 à 5 illustrent un système de transmission 1, du type réducteur de vitesse, comprenant un module d'actionnement et un dispositif d'actionnement selon un premier mode de réalisation. Un tel système de transmission peut, par exemple, faire partie d'une chaîne de transmission secondaire apte à transmettre un couple d'un moteur secondaire du véhicule, tel qu'une machine électrique tournante, vers un essieu arrière ou avant d'un véhicule tandis qu'une chaîne de transmission primaire est apte à transmettre un couple d'un moteur principal, par exemple un moteur thermique, vers les arbres de roue d'un autre essieu du véhicule.

Le réducteur de vitesse peut utiliser une architecture de type coaxiale comprenant un train épicycloïdal ou une architecture à arbres de transmission parallèles. En sortie du réducteur de vitesse, l'arbre de transmission est un différentiel qui est utilisé pour transmettre et distribuer un couple provenant d'une machine électrique tournante, non illustré, vers deux arbres de roue 2, 3 d'un essieu d'un véhicule automobile. Lorsque la machine électrique tournante associée au réducteur de vitesse est inactive, il n'y a pas d'intérêt à laisser ladite machine connectée à la roue du véhicule. On désengage alors un dispositif de déconnexion 110 qui est par exemple intégré au différentiel.

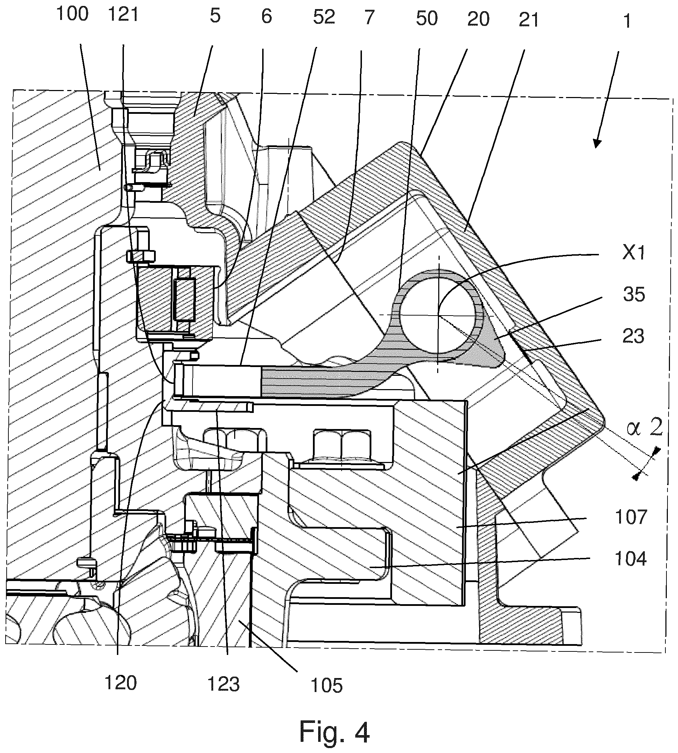

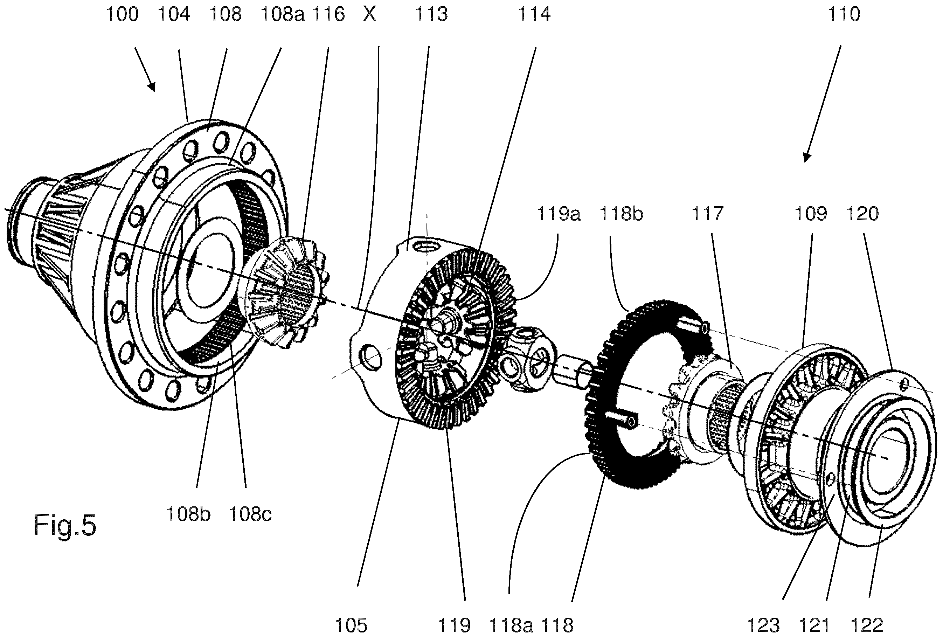

Comme illustré sur les figures 4 et 5, le système de transmission 1 selon le premier mode de réalisation comprend un carter de transmission 5 et au moins un arbre de transmission 100 inséré dans un alésage 6 du carter de transmission.

L'arbre de transmission réalisé sous la forme d'un différentiel 100 comporte un premier élément 104, mobile en rotation autour d'un axe principal X, et destiné à être entrainé par un moteur, tel qu'une machine électrique non représenté, un deuxième élément 105, également mobile en rotation autour de l'axe principal X et destiné à entraîner les arbres de roue 2, 3, et un dispositif de déconnexion 110 apte à sélectivement accoupler ou désaccoupler le premier élément 104 et le deuxième élément 105.

Le premier élément 104 comporte une roue dentée 107 qui est destinée à être entraînée par la machine électrique par l'intermédiaire d'un train d'engrenage réducteur non représenté. Ce premier élément 104 comprend aussi un boîtier 108 qui est solidaire en rotation de la roue dentée 107. Le boîtier 108 est ici illustré de manière monobloc, mais pourrait être composé de plusieurs pièces fixées entre-elles.

Le deuxième élément 105 comporte une couronne porteuse 113 de forme annulaire qui est guidée en rotation, autour de l'axe principal X, à l'intérieur du boîtier 108. Pour ce faire, le boitier 108 comporte une portion cylindrique interne coopérant avec une surface externe cylindrique de la couronne porteuse 113 afin de la guider en rotation par rapport au boîtier 108. Le deuxième élément 105 comporte en outre quatre engrenages satellites 114 visibles sur la figure 4, qui sont montés en rotation sur la couronne porteuse 113 autour d'un axe secondaire Z, perpendiculaire à l'axe principal X. Les quatre engrenages satellites 114 comportent chacun une denture conique qui engrène avec une denture conique complémentaire de deux engrenages planétaires 116, 117. Les deux engrenages planétaires 116, 117 sont mobiles en rotation autour de l'axe principal X et sont chacun solidaires en rotation de l'un des deux axes de roue 2, 3. La couronne porteuse 113, les engrenages satellites 114 et les engrenages planétaires 116, 117 forment un différentiel 100 permettant aux deux arbres de roue 2, 3 de tourner à des vitesses différentes.

Par ailleurs, le différentiel 100 comporte un dispositif de déconnexion 110 qui, dans la position accouplée permet de transmettre un couple entre le premier élément 104 et l'un des composants du deuxième élément 105, ici la couronne porteuse 113. Ainsi, le système de transmission permet, lorsque le dispositif déconnexion 110 est en position accouplée de transmettre un couple du moteur vers les arbres de roue 2, 3 en exerçant la fonction de différentiel autorisant des vitesses de rotation différentes des arbres de roue 2, 3.

Le dispositif de déconnexion 110 est actionné à l'aide d'un dispositif d'actionnement 30 pour passer rapidement de la position accouplée à la position désaccouplée. Dans ce premier mode de réalisation, le dispositif d'actionnement 30 est externe au différentiel 100 et pour des raisons de facilité de montage, il est rattaché à un module d'actionnement 20. Le module d'actionnement 20 comprend notamment un carter d'actionnement 21 et le dispositif d'actionnement 30, le carter d'actionnement et le dispositif d'actionnement étant pré-montés pour former un ensemble unitaire.

Comme illustré sur la figure 5, le dispositif déconnexion 110 comporte une première partie d'accouplement 118 qui est solidaire en rotation du boîtier 108 tout en étant mobile axialement le long de l'axe principal X par rapport audit boitier 108. La première partie d'accouplement 118 est mobile entre une position désaccouplée, représentée sur la figure 4, et une position accouplée. Dans la position désaccouplée, la première partie d'accouplement 118 est désaccouplée d'une deuxième partie d'accouplement 119 solidaire en rotation de la couronne porteuse 113 de sorte que la transmission de couple est interrompue entre le boitier 108 et la couronne porteuse 113. Au contraire, dans la position accouplée, la première partie d'accouplement 118 est accouplée à la deuxième partie d'accouplement 119, ce qui permet la transmission du couple entre le boîtier 108 et la couronne porteuse 113.

Dans le mode de réalisation représenté, le dispositif déconnexion 110 est un dispositif à crabot. Ainsi, l'une des première et deuxième partie d'accouplement 118, 119 comporte des dents tandis que l'autre comporte des rainures correspondantes dans lesquelles sont engagées lesdites dents lorsque la première partie d'accouplement 118 est en position accouplée. Dans le mode de réalisation représenté, la deuxième partie d'accouplement 119 est formée d'un seul tenant avec la couronne porteuse 113. En d'autres termes, des dents ou des rainures sont ménagées dans la face latérale de la couronnée porteuse 113 qui est tournée en regard de la première partie d'accouplement 118.

Comme représenté sur la figure 5, la première partie d'accouplement 118 est un composant de forme annulaire comprenant :
- une première denture 118a orientée radialement par rapport à l'axe principal X qui est agencée pour engrener avec le premier élément 104, et ;
- une deuxième denture 118b orientée axialement qui est agencée pour engrener avec la deuxième partie d'accouplement 119,
la première denture orientée radialement et la deuxième denture orientée axialement formant la partie annulaire du composant. Cela permet de solidariser en rotation la première partie d'accouplement 118 au boîtier 108 tout en permettant un déplacement axial relatif entre la première partie d'accouplement 118 et le boîtier 108.

Le boîtier 108 forme une cavité 108b agencée pour recevoir un train d'engrenages et supporte sur sa périphérie externe 108a la roue dentée 107 de transmission de couple. Sur l'entrée de la cavité 108b, le boitier 108 supporte une cannelure interne 108c agencée pour engrener avec la première denture 118a orientée radialement de la première partie d'accouplement 118. La cannelure interne 108c est par exemple une cannelure droite de géométrie complémentaire à la géométrie de la première denture 118a orientée radialement. En variante, la cannelure interne 108c peut être une succession d'évidements apte à recevoir la première denture 118a orientée radialement.

De manière complémentaire, la deuxième partie d'accouplement 119 comporte une denture complémentaire 119a orientée axialement qui est agencée pour engrener avec la deuxième denture 118b orientée axialement de la première partie d'accouplement 118 lorsque la première partie d'accouplement 118 est dans la position accouplée. La denture complémentaire 119a orientée axialement est par exemple une série de rainures présentant une géométrie complémentaire à la géométrie de la deuxième denture 118b orientée axialement. La denture complémentaire 119a orientée axialement peut comprendre des dents ou des rainures ménagées sur la face latérale de la couronnée porteuse 113 perpendiculaire à l'axe principal X.

Dans ce premier mode de réalisation de l'invention, la première denture 118a orientée radialement et la deuxième denture 118b orientée axialement sont contiguës. Comme la première denture 118a et la deuxième denture 118b ont le même nombre de dents, il est possible que les dents de la première denture 118a orientée radialement soient alignées avec les dents de la deuxième denture 118b orientée axialement, de sorte que le fond de la première denture communique directement avec le fond de la deuxième denture. On facilite ainsi l'obtention des dentures par usinage.

Comme nous l'avons vu précédemment, le système de transmission 1 comporte un dispositif d'actionnement 30 du dispositif de déconnexion 110, illustré plus en détail sur la figure 1, permettant de déplacer axialement la première partie d'accouplement 118.

Le dispositif d'actionnement 30 comporte :
- un moteur électrique 31 fixé au carter d'actionnement 21 ;
- un dispositif de réduction de vitesse 40 lié cinématiquement au rotor du moteur électrique 31 et un arbre de sortie 41 du dispositif de réduction de vitesse ayant un premier axe de rotation X1 ;
- une fourchette d'actionnement 50 solidaire en rotation de l'arbre de sortie 41 du dispositif de réduction de vitesse et comprenant une extrémité 51 d'actionnement décalée radialement par rapport au premier axe de rotation X1.

La fourchette d'actionnement 50 pivote selon un premier secteur angulaire α1 dans le carter d'actionnement 21. La valeur d'angle du premier secteur angulaire α1 est comprise entre 5° et 120°.

Ce premier secteur angulaire α1 permet à la fourchette d'actionnement 50 de prendre toutes les positions nécessaires, depuis la phase d'assemblage du module d'actionnement 20 sur le carter de transmission jusqu'aux phases de fonctionnement où le dispositif de déconnexion 110 est en position accouplée ou en position désaccouplée.

Le carter d'actionnement 21 comprend un fond 22 et deux parois parallèles 23 issues de matière avec le fond, les deux parois 23 servent de support à l'arbre de sortie 41 du dispositif de réduction de vitesse 40. Le moteur électrique 31 est rapporté sur la paroi externe 24 du carter d'actionnement 21.

Le carter d'actionnement 21 comprend également une embase de fixation 28 et l'extrémité 51 d'actionnement de la fourchette d'actionnement dépasse de l'embase de fixation 28 du carter d'actionnement.

La fourchette d'actionnement 50 comprend un corps 53 et deux bras d'actionnement 52 supportant l'extrémité 51 d'actionnement, les deux bras d'actionnement 52 étant obtenus de matière avec le corps de la fourchette. Le corps 53 est logé dans le carter d'actionnement 21 tandis que les deux bras d'actionnement 52 dépassent du carter d'actionnement 21.

L'extrémité 51 d'actionnement est dans ce premier mode de réalisation un patin articulé à l'extrémité du bras d'actionnement 52. L'extrémité 51 est insérée dans une gorge annulaire 121 du dispositif de déconnexion, plus précisément dans une gorge annulaire 121 formée dans un baladeur axial 120 qui est rapporté sur la première partie d'accouplement 118.

Le baladeur axial 120 fait office d'interface entre la fourchette d'actionnement 50 et le dispositif de déconnexion 110. Le baladeur axial 120 présente une forme de révolution et comprend un rebord d'appui 122 et un rebord d'accostage 123. Le rebord d'appui 122 et le rebord d'accostage 123 entourent la gorge annulaire 121. Le diamètre extérieur du rebord d'accostage 123 est supérieur au diamètre extérieur du rebord d'appui 122.

Le baladeur axial 120 est fixé sur la première partie d'accouplement 118 à l'aide de vis de fixation.

Comme illustré sur la figure 5, un couvercle de différentiel 109 est intercalé axialement entre le baladeur axial 120 et la première partie d'accouplement 118. Le couvercle de différentiel 109 est solidaire du boitier de différentiel 108. Le couple moteur en provenance de la roue dentée 107 est transmis à la première partie d'accouplement 118 par l'intermédiaire d'entretoises qui passent au travers du couvercle de différentiel 109. Un mouvement relatif axial est possible entre le baladeur axial 120 et le couvercle de différentiel 109.

Afin de permettre le déplacement axial de la première partie d'accouplement 118 du dispositif de déconnexion 110, la fourchette d'actionnement 50 se déplace angulairement selon un deuxième secteur angulaire α2. En position accouplée, l'extrémité 51 d'actionnement est en appui sur le rebord d'accostage 123. En position désaccouplée, l'extrémité 51 d'actionnement est en appui sur le rebord d'appui 122.

La position angulaire de fonctionnement varie selon une valeur d'angle du deuxième secteur angulaire α2 qui est par exemple comprise entre 1° et 30°. Le deuxième secteur angulaire α2 est notamment compris dans le premier secteur angulaire α1. La valeur d'angle du deuxième secteur angulaire α2 est donc strictement inférieure à la valeur d'angle du premier secteur angulaire α1 de sorte que la position angulaire de fonctionnement est distincte de la position angulaire extrême de montage. Cela permet de prendre en compte l'ensemble des tolérances dimensionnelles des composants constituant le système de transmission et le module d'actionnement.

Afin de contrôler la position angulaire de la fourchette, le module d'actionnement 20 intègre un capteur de position 25. Le carter d'actionnement 21 supporte le capteur de position 25 de la fourchette d'actionnement et la face de détection 25a du capteur de position est disposée en vis-à-vis de l'un des deux bras d'actionnement 52

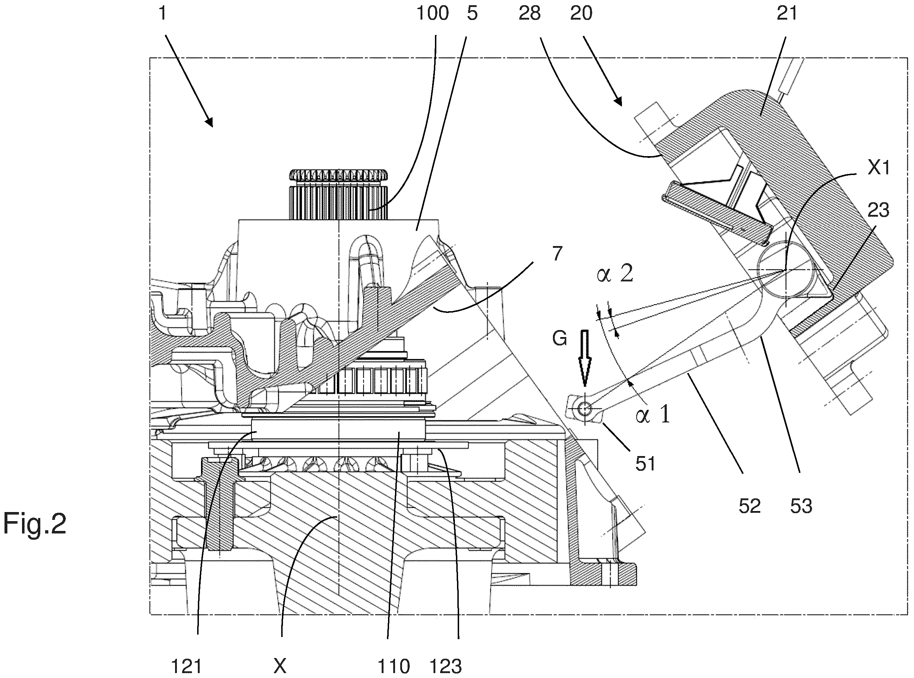

La figure 2 illustre la phase d'assemblage du module d'actionnement 20 sur le système de transmission. Le module d'actionnement est rapporté sur l'extérieur du carter de transmission 5 et l'extrémité d'actionnement 51 de la fourchette d'actionnement est proéminente par rapport au carter d'actionnement 21. Les deux bras d'actionnement 52 qui dépassent du carter d'actionnement 21 peuvent être introduit dans une lumière 7 du carter de transmission.

Dans cette phase d'assemblage, la fourchette d'actionnement prend tout d'abord une position angulaire extrême de montage correspondant à une des bornes du premier secteur angulaire α1.

Le procédé d'assemblage comprend alors les étapes suivantes :
- on insère tout d'abord l'arbre de transmission 100 dans un alésage 6 du carter de transmission 5 jusqu'à la mise en butée axiale de l'arbre de transmission sur le carter de transmission selon la direction de l'axe principal X de l'alésage ;
- on insère la fourchette d'actionnement 50 au sein de la lumière 7 du carter de transmission 5 et on applique une extrémité 51 d'actionnement de la fourchette d'actionnement dans la gorge annulaire 121 du dispositif de déconnexion ;
- on rapproche le dispositif d'actionnement 30 selon une direction perpendiculaire à l'axe principal X de l'alésage 6 du carter de transmission jusqu'à la mise en appui du carter d'actionnement du module d'actionnement sur le carter de transmission ;
- on fixe le module sur le carter de transmission avec des vis de fixation.

Afin de garantir le bon positionnement des bras d'actionnement au début de la phase d'assemblage, la position angulaire extrême de montage de la fourchette d'actionnement est obtenue par une mise en butée mécanique du carter d'actionnement et d'une excroissance 35 formée sur la fourchette d'actionnement. L'excroissance 35 de la fourchette d'actionnement est en appui sur une face plane 23 usinée du carter d'actionnement. Cet appui sur la face plane 23 matérialise une des bornes du premier secteur angulaire α1.

Pour garantir le maintien en position angulaire extrême de montage, on utilise l'action de la gravité G en plaçant l'excroissance du bon côté du premier axe de rotation X1. Le poids de la fourchette d'actionnement est tel que l'excroissance 35 reste en appui sur la face plane 23. La gravité G facilite l'assemblage du module d'actionnement étant donné que le différentiel serait positionné verticalement dans le carter de transmission, et que par son propre poids la deuxième denture 118b orientée axialement de la première partie d'accouplement 118 s'engage dans la denture complémentaire 119a de la deuxième partie d'accouplement 119.

Lors du rapprochement du dispositif d'actionnement 30 selon la direction perpendiculaire à l'axe principal X, l'extrémité 51 d'actionnement vient rapidement en appui sur le rebord d'accostage 123. Le rebord d'accostage 123 sert alors de surface plane de guidage pour le module d'actionnement jusqu'à atteindre la mise en contact de l'embase de fixation 28 du carter d'actionnement 21 avec le carter de transmission 5.

L'excroissance 35 et les bras d'actionnement 52 sont décalés angulairement par rapport au premier axe de rotation. Selon le premier mode de réalisation, les bras d'actionnement 52 et l'excroissance 35 sont décalés d'un angle de 120° par rapport au premier axe de rotation.

Lors de l'étape de rapprochement du dispositif d'actionnement selon une direction perpendiculaire à l'axe principal X, la position angulaire de la fourchette change jusqu'à prendre une position angulaire de fonctionnement distincte de la position angulaire extrême de montage. La position angulaire de fonctionnement est atteinte lorsque le carter d'actionnement 21 est en appui sur le carter de transmission 5 et est fixé avec des vis de fixation comme cela est illustré sur la figure 4.

La position angulaire de fonctionnement varie dans le deuxième secteur angulaire α2.

Lorsque la fourchette d'actionnement se situe dans le deuxième secteur angulaire α2, l'excroissance 35 n'est plus en contact avec le carter d'actionnement 21.

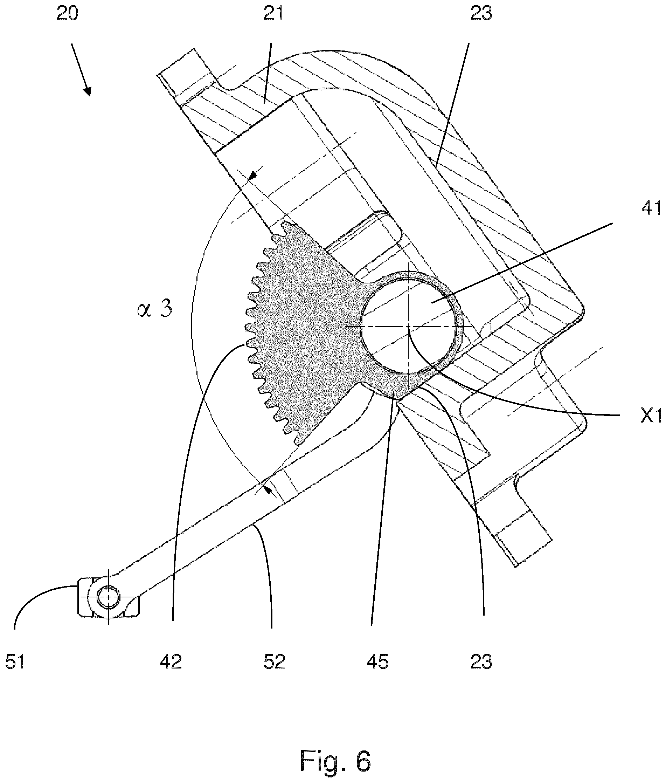

On va maintenant décrire en référence à la figure 6, un deuxième mode de réalisation de l'invention, qui diffère du précédent par un agencement différent de la butée mécanique entre le carter d'actionnement 21 et un composant du dispositif d'actionnement 30.

Dans ce deuxième mode de réalisation de l'invention, la position angulaire extrême de montage de la fourchette d'actionnement est obtenue par une mise en butée mécanique du carter d'actionnement 21 et d'une excroissance 45 formée sur un des pignons ou secteur denté du dispositif de réduction de vitesse.

Le pignon 41 et le secteur dentée 42 engrènent mutuellement pour réduire la vitesse de rotation du moteur électrique.

Dans cet exemple, le secteur denté 42 qui supporte l'excroissance 45 comprend une denture s'étendant sur un troisième secteur angulaire α3 compris entre 20° et 150°. L'excroissance 45 du secteur denté 42 est en appui sur une face plane 23 du carter d'actionnement 21.

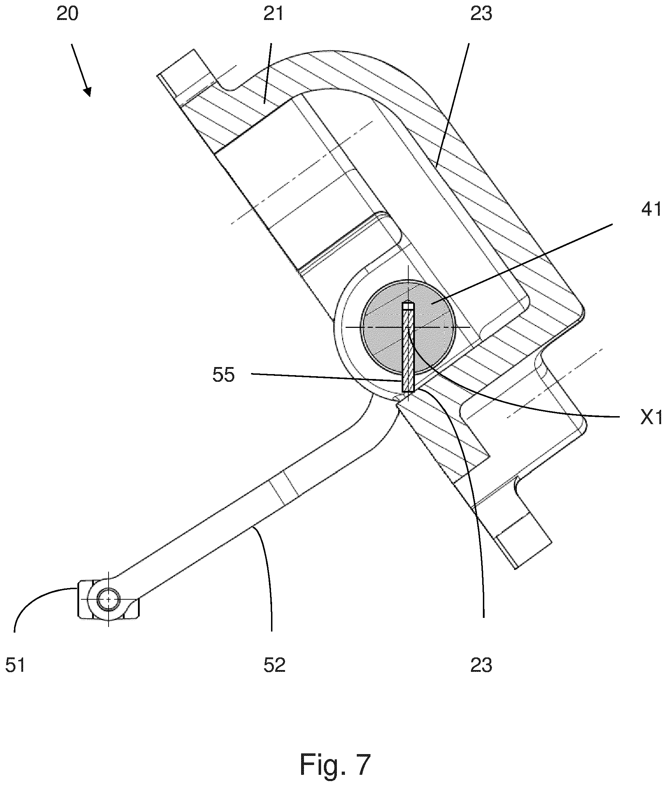

On va maintenant décrire en référence à la figure 7, un troisième mode de réalisation de l'invention, qui diffère du précédent par un agencement différent de la butée mécanique entre le carter d'actionnement 21 et un composant du dispositif d'actionnement 30.

Dans ce troisième mode de réalisation de l'invention, la position angulaire extrême de montage de la fourchette d'actionnement est obtenue par une mise en butée mécanique du carter d'actionnement 21 et d'une goupille 55 emmanchée dans l'arbre de sortie 41 du dispositif de réduction de vitesse 40.

L'emmanchement de la goupille 55 est perpendiculaire au premier axe de rotation X1.

Avantageusement, la goupille 55 emmanchée est en appui sur une face plane 23 du carter d'actionnement 21.

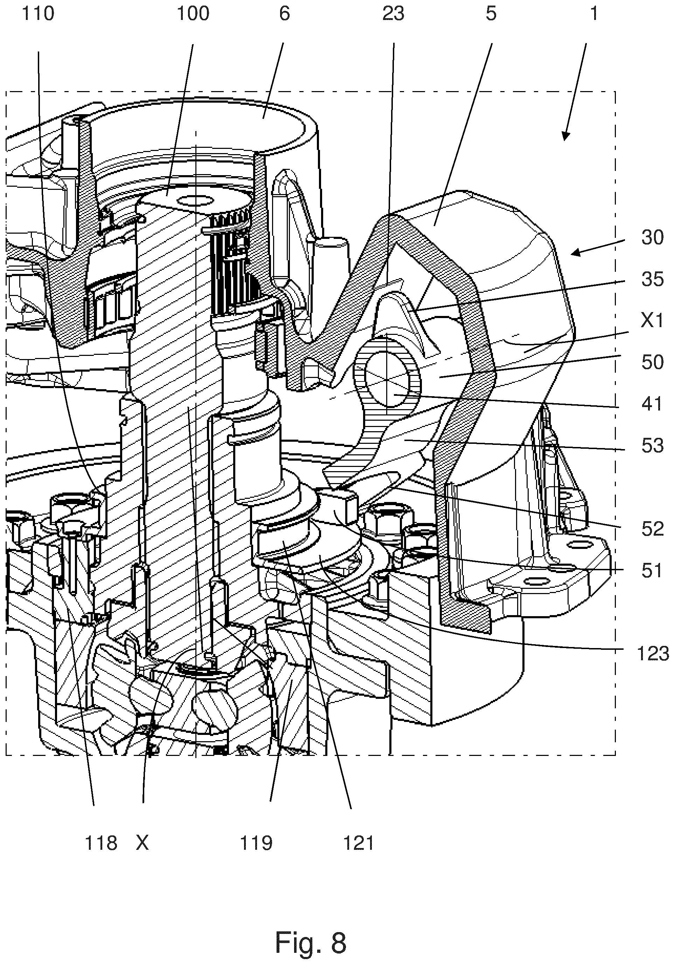

On va maintenant décrire en référence à la figure 8, un quatrième mode de réalisation de l'invention, qui diffère du premier mode de réalisation par le fait que le dispositif d'actionnement selon l'invention est assemblé directement sur le carter de transmission 5. Dans ce quatrième mode de réalisation de l'invention, il n'est pas nécessaire de fournir un module d'actionnement car le carter de transmission remplace le carter d'actionnement.

Comme illustré sur la figure 8, le système de transmission 1 comprend :
- un carter de transmission 5 ;
- un arbre de transmission 100 comprenant un dispositif de déconnexion 110 de la transmission du couple, l'arbre de transmission 100 est inséré dans un alésage 6 du carter de transmission 5 ;
- un dispositif d'actionnement 30, dans lequel la fourchette d'actionnement 50 est logée dans le carter de transmission et la fourchette d'actionnement s'insère dans une gorge annulaire du dispositif de déconnexion,

le carter de transmission 5 fait office de carter d'actionnement,
le carter de transmission 5 et le dispositif d'actionnement 30 sont pré-montés pour former un ensemble unitaire.

Le dispositif d'actionnement 30 comporte :
- un moteur électrique fixé au carter de transmission 5 ;
- un dispositif de réduction de vitesse lié cinématiquement au rotor du moteur électrique et un arbre de sortie 41 du dispositif de réduction de vitesse ayant un premier axe de rotation X1 ;
- une fourchette d'actionnement 50 solidaire en rotation de l'arbre de sortie 41 du dispositif de réduction de vitesse et comprenant une extrémité 51 d'actionnement décalée radialement par rapport au premier axe de rotation X1, la fourchette d'actionnement étant apte à pivoter selon un premier secteur angulaire α1 dans le carter d'actionnement 21.

La valeur d'angle du premier secteur angulaire α1 est comprise entre 5° et 120°.

Ce premier secteur angulaire α1 permet à la fourchette d'actionnement 50 de prendre toutes les positions nécessaires, depuis la phase d'assemblage de l'arbre de transmission 100 sur le carter de transmission jusqu'aux phases de fonctionnement où le dispositif de déconnexion 110 est en position accouplée ou en position désaccouplée.

La fourchette d'actionnement 50 comprend un corps 53 et deux bras d'actionnement 52 supportant l'extrémité 51 d'actionnement, les deux bras d'actionnement 52 étant obtenus de matière avec le corps de la fourchette. Le corps 53 et les deux bras d'actionnement 52 sont logés dans le carter de transmission 5.

L'extrémité 51 d'actionnement est dans ce quatrième mode de réalisation un patin articulé à l'extrémité du bras d'actionnement 52.

Afin de permettre le déplacement axial de la première partie d'accouplement 118 du dispositif de déconnexion 110, la fourchette d'actionnement 50 se déplace angulairement selon un deuxième secteur angulaire α2.

La valeur d'angle du deuxième secteur angulaire α2 est comprise entre 1° et 30°. Le deuxième secteur angulaire est notamment compris dans le premier secteur angulaire α1.

La figure 8 illustre plus précisément la phase d'assemblage de l'arbre de transmission 100 sur le système de transmission. Dans cette phase d'assemblage, la fourchette d'actionnement prend tout d'abord une position angulaire extrême de montage correspondant à une des bornes du premier secteur angulaire α1.

Le procédé d'assemblage comprend alors les étapes suivantes :
- on insère tout d'abord l'arbre de transmission 100 dans un alésage 6 du carter de transmission 5;
- on applique en aveugle une extrémité 51 d'actionnement de la fourchette d'actionnement dans la gorge annulaire du dispositif de déconnexion ;
- on déplace l'arbre de transmission 100 selon la direction de l'axe principal X de l'alésage jusqu'à la mise en butée axiale de l'arbre de transmission sur le carter de transmission.

Afin de garantir le bon positionnement des bras d'actionnement 52 au début de la phase d'assemblage, la position angulaire extrême de montage de la fourchette d'actionnement est obtenue par une mise en butée mécanique du carter d'actionnement et d'une excroissance 35 formée sur la fourchette d'actionnement. L'excroissance 35 et les bras d'actionnement 52 sont décalés angulairement par rapport au premier axe de rotation.

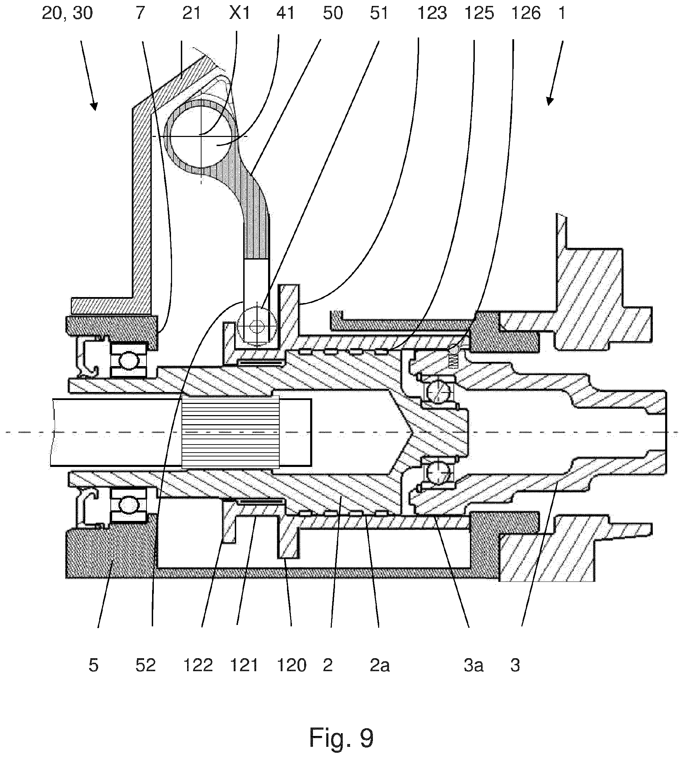

On va maintenant décrire en référence à la figure 9, un cinquième mode de réalisation de l'invention, qui diffère du premier mode de réalisation par le fait que le dispositif de déconnexion 110 est situé en dehors du différentiel 100 du réducteur de vitesse.

Dans cet exemple, le système de transmission 1 comprend :
- un carter de transmission 5 ;
- un arbre menant 2 de transmission comprenant une première cannelure externe 2a, l'arbre menant de transmission étant inséré dans un alésage du carter de transmission ;
- un arbre mené 3 de transmission coaxial à l'arbre menant comprenant une deuxième cannelure externe 3a ;
- un baladeur axial 120 concentrique aux arbres mené et menant ayant une forme de révolution, le baladeur axial comprenant au moins une première cannelure interne 125 de connexion agencée pour entraîner en rotation l'arbre menant 2 et une deuxième cannelure interne 126 de connexion agencée pour entraîner en rotation l'arbre mené, les première et deuxième cannelures internes 125, 126 étant engagées respectivement dans la première cannelure externe 2a de l'arbre menant et la deuxième cannelure externe 3a de l'arbre mené lorsque le baladeur axial 120 est dans une position extrême d'accouplement ;
- un module d'actionnement 20, dans lequel la fourchette d'actionnement 50 passe au travers d'une lumière 7 réalisée dans le carter de transmission 5 et la fourchette d'actionnement 50 s'insère dans une gorge annulaire 121 du baladeur axial 120.

Dans ce cinquième mode de réalisation, le module d'actionnement 20 comprend un carter d'actionnement 21 et un dispositif d'actionnement 30 comportant :
- un moteur électrique fixé au carter d'actionnement 21 ;
- un dispositif de réduction de vitesse lié cinématiquement au rotor du moteur électrique et un arbre de sortie 41 du dispositif de réduction de vitesse ayant un premier axe de rotation X1 ;
- une fourchette d'actionnement 50 solidaire en rotation de l'arbre de sortie 41 du dispositif de réduction de vitesse et comprenant une extrémité 51 d'actionnement décalée radialement par rapport au premier axe de rotation X1.

Dans ce module d'actionnement 20, le carter d'actionnement 21 et le dispositif d'actionnement 30 sont pré-montés pour former un ensemble unitaire, et dans lequel l'extrémité d'actionnement 51 de la fourchette d'actionnement est proéminente par rapport au carter d'actionnement 21.

L'extrémité 51 d'actionnement est dans ce cinquième mode de réalisation un roulement à billes dont la bague non tournante est fixée sur le bras d'actionnement 52.

Dans cet exemple, le baladeur axial 120 fait office d'interface entre la fourchette d'actionnement 50 et le dispositif de déconnexion 110. Le baladeur axial 120 présente une forme de révolution et comprend un rebord d'appui 122 et un rebord d'accostage 123. Le rebord d'appui 122 et le rebord d'accostage 123 entourent la gorge annulaire 121. Le diamètre extérieur du rebord d'accostage 123 est supérieur au diamètre extérieur du rebord d'appui 122.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Dispositif d'actionnement (30) pour un système de transmission (1), comprenant :
- un moteur électrique (31) apte à être fixé à un carter d'actionnement (5, 21) ;
- un dispositif de réduction de vitesse (40) lié cinématiquement au rotor du moteur électrique et un arbre de sortie (41) du dispositif de réduction de vitesse ayant un premier axe de rotation (X1) ;
- une fourchette d'actionnement (50) solidaire en rotation de l'arbre de sortie du dispositif de réduction de vitesse et comprenant une extrémité (51) d'actionnement décalée radialement par rapport au premier axe de rotation, la fourchette d'actionnement étant apte à pivoter selon un premier secteur angulaire ( α1 ) dans le carter d'actionnement,
**caractérisé en ce que** la fourchette d'actionnement (50) est apte à prendre une position angulaire extrême de montage correspondant à une des bornes du premier secteur angulaire ( α1 ) et **en ce que** la fourchette d'actionnement est apte à prendre une position angulaire de fonctionnement distincte de la position angulaire extrême de montage, la position angulaire de fonctionnement pouvant varier dans un deuxième secteur angulaire ( α2 ) compris dans le premier secteur angulaire ( α1 ).

2. Dispositif d'actionnement (30) selon la revendication 1, dans lequel la position angulaire extrême de montage de la fourchette d'actionnement (50) est apte à être obtenue par une mise en butée mécanique du carter d'actionnement (5, 21) et d'un composant choisi parmi la fourchette d'actionnement, le dispositif de réduction de vitesse (40) ou l'arbre de sortie (41).

3. Dispositif d'actionnement (30) selon l'une des revendications précédentes, dans lequel la position angulaire extrême de montage de la fourchette d'actionnement (50) est apte à être obtenue par une mise en butée mécanique du carter d'actionnement (5, 21) et d'une excroissance (35) formée sur la fourchette d'actionnement.

4. Dispositif d'actionnement (30) selon la revendication précédente, dans lequel la fourchette d'actionnement (50) comprend un corps (53) et au moins un bras d'actionnement (52) supportant l'extrémité d'actionnement, notamment deux bras d'actionnement, l'excroissance (35) et l'au moins un bras d'actionnement sont décalés angulairement par rapport au premier axe de rotation (X1).

5. Dispositif d'actionnement (30) selon la revendication précédente, dans lequel l'excroissance (35) de la fourchette d'actionnement est apte à être en appui sur une face plane (23) du carter d'actionnement.

6. Dispositif d'actionnement (30) selon la revendication 1 ou 2, dans lequel la position angulaire extrême de montage de la fourchette d'actionnement (50) est apte à être obtenue par une mise en butée mécanique du carter d'actionnement et d'une excroissance (45) formée sur un des pignons ou secteur denté du dispositif de réduction de vitesse (40).

7. Module d'actionnement (20) comprenant un carter d'actionnement (21) et un dispositif d'actionnement (30) selon l'une quelconque des revendications précédentes, le carter d'actionnement (21) et le dispositif d'actionnement (30) sont pré-montés pour former un ensemble unitaire, et dans lequel l'extrémité (51) d'actionnement de la fourchette d'actionnement est proéminente par rapport au carter d'actionnement (21).

8. Module d'actionnement (20) selon la revendication précédente, dans lequel le carter d'actionnement supporte un capteur de position (25) de la fourchette d'actionnement, la face de détection (25a) du capteur de position étant disposée en vis-à-vis d'au moins un bras d'actionnement (52) de la fourchette d'actionnement.

9. Module d'actionnement selon la revendication 7 ou 8, dans lequel le moteur électrique (31) est rapporté sur une paroi externe du carter d'actionnement ou logé dans le volume interne du carter d'actionnement (21).

10. Système de transmission (1) pour véhicule motorisé comprenant :
- un carter de transmission (5);
- un arbre de transmission (100) comprenant un dispositif de déconnexion (110) de la transmission du couple, l'arbre de transmission est inséré dans un alésage (6) du carter de transmission ;
- un module d'actionnement (20) selon l'une des revendications 7 à 9, dans lequel la fourchette d'actionnement (50) passe au travers d'une lumière (7) réalisée dans le carter de transmission (5) et l'extrémité (51) d'actionnement s'insère dans une gorge annulaire (121) du dispositif de déconnexion.

11. Système de transmission (1) selon la revendication précédente dans lequel l'arbre de transmission (100) est un différentiel comprenant un boitier (108) de différentiel supportant une roue dentée (107) et une couronne porteuse (113), le boitier (108) et la couronne porteuse (113) étant mobiles en rotation l'un par rapport à l'autre autour d'un axe principal (X), le boitier (108) étant destiné à être entrainé par une machine électrique tournante et la couronne porteuse (113) étant destiné à entraîner au moins un arbre de roue (2, 3) du véhicule motorisé.

12. Système de transmission (1) selon la revendication précédente dans lequel le dispositif de déconnexion (110) comporte une première partie d'accouplement (118) solidaire en rotation du boitier (108) et une deuxième partie d'accouplement (119) solidaire en rotation de la couronne porteuse (113), la première partie d'accouplement (118) étant mobile axialement par rapport au boitier (108) entre une position accouplée dans laquelle la première partie d'accouplement (118) est accouplée avec la couronne porteuse (113) pour transmettre un couple entre le boitier (108) et la couronne porteuse (113) et une position désaccouplée dans laquelle la première partie d'accouplement (118) et la deuxième partie d'accouplement (119) sont désaccouplées l'une de l'autre, et dans lequel la première partie d'accouplement (118) supporte un baladeur axial (120) de forme annulaire qui comprend la gorge annulaire (121) du dispositif de déconnexion.

13. Système de transmission (1) selon la revendication précédente dans lequel le baladeur axial (120) présente une forme de révolution et comprend un rebord d'appui (122) et un rebord d'accostage (123), ledit rebord d'appui et ledit rebord d'accostage entourent la gorge annulaire (121) et dans lequel le diamètre extérieur du rebord d'accostage (123) est supérieur au diamètre extérieur du rebord d'appui (122).

14. Système de transmission (1) comprenant :
- un carter de transmission (5) ;
- un arbre de transmission (100) comprenant un dispositif de déconnexion (110) de la transmission du couple, l'arbre de transmission est inséré dans un alésage (6) du carter de transmission ;
- un dispositif d'actionnement (30) selon l'une des revendications 1 à 6, dans lequel la fourchette d'actionnement (50) est logée dans le carter de transmission (5) et la fourchette d'actionnement s'insère dans une gorge annulaire (121) du dispositif de déconnexion ;
le carter de transmission (5) fait office de carter d'actionnement,
le carter de transmission (5) et le dispositif d'actionnement (30) sont pré-montés pour former un ensemble unitaire.

15. Procédé d'assemblage d'un système de transmission (1) selon l'une des revendications 10 à 13, comprenant les étapes suivantes :
- on insère l'arbre de transmission (100) dans un alésage (6) du carter de transmission jusqu'à la mise en butée axiale de l'arbre de transmission sur le carter de transmission (5) selon la direction de l'axe principal (X) de l'alésage (6) ;
- on insère la fourchette d'actionnement (50) au sein de la lumière (7) du carter de transmission et on applique une extrémité (51) d'actionnement de la fourchette d'actionnement dans la gorge annulaire (121) du dispositif de déconnexion (110) ;
- on rapproche le dispositif d'actionnement (30) selon une direction perpendiculaire à l'axe principal (X) de l'alésage (6) du carter de transmission jusqu'à la mise en appui du carter d'actionnement (21) du module d'actionnement (20) sur le carter de transmission ;
- on fixe le module d'actionnement (20) sur le carter de transmission avec des vis de fixation.
